# EUROPÄISCHE PATENTANMELDUNG

(11) **EP 3 485 980 A1**
(43) Veröffentlichungstag der Anmeldung: **22.05.2019**
(21) Anmeldenummer: 18198807.2
(22) Anmeldetag: 05.10.2018
(51) Int. Cl.: B05B 1/00

(54) **SPRÜHDÜSE UND ANORDNUNG MIT EINER SPRÜHDÜSE**

(30) Priorität: 17.11.2017 DE 102017220538
(71) Anmelder: Lechler GmbH, 72555 Metzingen (DE)
(72) Erfinder: Engels, Nathan, 72764 Reutlingen (DE); Pulkkila, Harri, 04130 Sipoo (FI)
(74) Vertreter: Patentanwälte Ruff, Wilhelm, Beier, Dauster & Partner mbB

(57) **Zusammenfassung**

Die Erfindung betrifft eine Sprühdüse zum Versprühen von Flüssigkeiten mit einem Gehäuse (12), wobei das Gehäuse (12) eine Austrittsöffnung aufweist, und mit einem stromaufwärts der Austrittsöffnung angeordneten Dralleinsatz (16), bei der der Dralleinsatz (16) wenigstens ein gebogenes Strömungsleitblech (20, 22) aufweist, das wenigstens eine schräg zu einer Mittellängsachse (18) des Gehäuses (12) angeordnete Strömungsleitfläche für die zu versprühende Flüssigkeit bildet.

## Beschreibung

Die Erfindung betrifft eine Sprühdüse zum Versprühen von Flüssigkeiten mit einem Gehäuse, wobei das Gehäuse eine Austrittsöffnung aufweist, und mit einem stromaufwärts der Austrittsöffnung angeordneten Dralleinsatz. Die Erfindung betrifft auch eine Anordnung mit einer Sprühdüse.

Düsen mit Dralleinsatz können als Vollkegeldüsen oder Hohlkegeldüsen ausgeführt werden. Insbesondere Vollkegeldüsen kommen bei sogenannten Scrubbern oder Gaswäschern zur Abgasnachbehandlung in Schiffen zum Einsatz. Herkömmliche Vollkegeldüsen können dabei aufgrund ihres hohen Gewichts und ihres großen Platzbedarfs bei solchen Anwendungen problematisch sein.

Erfindungsgemäß ist eine Sprühdüse zum Versprühen von Flüssigkeiten mit einem Gehäuse, wobei das Gehäuse eine Austrittsöffnung aufweist, und mit einem stromaufwärts der Austrittsöffnung angeordneten Dralleinsatz vorgesehen, bei der der Dralleinsatz an dem Gehäuse fixiert ist und abschnittsweise außerhalb des Gehäuses angeordnet ist.

Indem der Dralleinsatz abschnittsweise außerhalb des Gehäuses angeordnet ist, kann das Gehäuse wesentlich kleiner und damit leichter als bei konventionellen Sprühdüsen ausgeführt werden. Speziell kann die Innenwand eines Rohrabschnitts, in dessen freies Ende die Sprühdüse eingesetzt wird, als Drallkammer verwendet werden. Durch das geringere Gewicht der Sprühdüse und auch durch das kürzere Gehäuse der Sprühdüse im Vergleich zu konventionellen Sprühdüsen wird der Rohrabschnitt mit geringeren Biegemomenten und allgemein geringeren Belastungen beaufschlagt, so dass eine wesentlich geringere Anfälligkeit gegenüber Vibrationen und allgemein äußeren Krafteinwirkungen gegeben ist. Darüber hinaus kann die erfindungsgemäße Sprühdüse durch das kürzer und leichter ausgebildete Gehäuse kostengünstiger als konventionelle Sprühdüsen hergestellt werden, da ja der bei konventionellen Sprühdüsen vorhandene Abschnitt des Gehäuses, der den Dralleinsatz umgibt und dadurch die Drallkammer bildet, vollständig entfällt.

In Weiterbildung der Erfindung weist der Dralleinsatz wenigstens ein gebogenes Strömungsleitblech auf, das wenigstens eine schräg zu einer Mittellängsachse des Gehäuses angeordnete Strömungsleitfläche für die zu versprühende Flüssigkeit bildet.

Überraschenderweise lässt sich auch bei einer Ausführung des Dralleinsatzes mittels wenigstens einem gebogenen Strömungsleitblech ein sehr gutes Sprühbild erzielen. Bei Sprühdüsen für die Abgasnachbehandlung wird dabei vor allem auf eine sehr gleichmäßige Verteilung der Tropfengrößen sowie auch auf eine gleichmäßige Überdeckung des zu besprühenden Volumens geachtet. Die Ausführung des Dralleinsatzes mit wenigstens einem gebogenen Strömungsleitblech erlaubt es aber auch, den Dralleinsatz wesentlich kostengünstiger und auch leichter als beim Herstellen des Dralleinsatzes aus Vollmaterial ausführen zu können. Gerade beim Einsatz in Gaswäschern zur Abgasnachbehandlung, sogenannten Scrubbern, auf Schiffen ist dies von erheblichem Vorteil. Denn die in der Regel zahlreichen Düsen in dem Gaswäscher können dadurch deutlich leichter ausgeführt werden, so dass der Schwerpunkt des Schiffs nicht ungünstig beeinflusst wird und auch die Anfälligkeit gegenüber Vibrationen deutlich verringert ist. Das Strömungsleitblech wird dabei aus flächigem Blechmaterial, beispielsweise Edelstahlblech geformt. Es können zwei oder mehr gebogene Strömungsleitbleche in das Gehäuse eingesetzt werden. Die Sprühdüse kann zur Erzeugung eines Vollkegelsprays oder Hohlkegelsprays ausgebildet werden.

In Weiterbildung der Erfindung weist das Strömungsleitblech mehrere durch Biegestellen voneinander getrennte ebene Abschnitte auf, wobei jede der Biegestellen mittels einer Biegung um eine Biegeachse gebildet ist.

Das Strömungsleitblech ist dadurch einfach und kostengünstig herstellbar, da lediglich mehrere Biegevorgänge um jeweils eine Biegeachse durchgeführt werden müssen. Speziell muss das Blech nicht in zwei verschiedenen Krümmungsebenen mittels teurer Presswerkzeuge verformt werden.

In Weiterbildung der Erfindung sind die Biegeachsen aller Biegestellen des Strömungsleitblechs parallel zueinander angeordnet.

Auf diese Weise wird die Herstellung weiter vereinfacht. Das Strömungsleitblech wird dann nämlich durch mehrere Biegungen um parallele Biegeachsen hergestellt. Dies vereinfacht die Ausführung der Biegevorrichtung erheblich.

In Weiterbildung der Erfindung sind die Biegeachsen aller Biegestellen senkrecht zur Mittellängsachse des Gehäuses angeordnet.

In Weiterbildung der Erfindung weist das Strömungsleitblech einen sich parallel zur Mittellängsachse der Sprühdüse erstreckenden Befestigungsstreifen auf, der mit einem Gehäuse der Sprühdüse verbunden ist.

Mittels eines solchen Befestigungsstreifens kann das Strömungsleitblech in sehr einfacher und platzsparender Weise mit dem Gehäuse verbunden werden.

In Weiterbildung der Erfindung ist der Befestigungsstreifen in eine passende Ausnehmung am Gehäuse eingesetzt.

Auf diese Weise kann die erfindungsgemäße Sprühdüse auch ohne spezielle Vorrichtung zusammengebaut werden, da die exakte Positionierung von Gehäuse und Strömungsleitblech bereits durch den Befestigungsstreifen und die Ausnehmung definiert ist. Das Strömungsleitblech wird in der Ausnehmung positioniert und dann mit dem Gehäuse verbunden, beispielsweise mittels Schweißen.

In Weiterbildung der Erfindung sind zwei identisch ausgebildete Strömungsleitbleche vorgesehen, die im Bereich der Mittellängsachse des Gehäuses miteinander verbunden sind.

Auf diese Weise kann der Dralleinsatz aus zwei identischen Strömungsleitblechen aufgebaut werden, wodurch die Kosten weiter verringert werden. Eine Verbindung der beiden Strömungsleitbleche im Bereich der Mittellängsachse des Gehäuses sorgt für eine sehr stabile Ausbildung des Dralleinsatzes.

In Weiterbildung der Erfindung sind die beiden Strömungsleitbleche an den Innenkanten der jeweils schräg zur Mittellängsachse des Gehäuses angeordneten Strömungsleitflächen miteinander verbunden.

In Weiterbildung der Erfindung sind die beiden Strömungsleitbleche achsensymmetrisch zur Mittellängsachse des Gehäuses angeordnet.

In Weiterbildung der Erfindung weist jedes der Strömungsleitbleche an einer Innenkante eine Ausklinkung oder Ausnehmung auf, deren Breite im Wesentlichen der Dicke der Strömungsleitbleche entspricht, wobei die beiden Strömungsleitbleche an den Ausklinkungen ineinander eingreifen.

Auf diese Weise können die beiden Strömungsleitbleche an ihrer jeweiligen Innenkante in stabiler Weise miteinander verbunden werden. Die beiden Strömungsleitbleche werden so zueinander angeordnet, dass sie an den Ausklinkungen ineinander eingreifen. Gleichzeitig werden die Befestigungsstreifen der Strömungsleitbleche in passende Ausnehmungen am Gehäuse eingesetzt. Auch ohne Verwendung einer speziellen Vorrichtung können die Strömungsleitbleche dadurch exakt an der vordefinierten Position am Gehäuse fixiert werden. Dies kann dann zusätzlich durch Verschweißen der Strömungsleitbleche miteinander im Bereich der Ausklinkungen sowie an den Befestigungsstreifen mit dem Gehäuse erfolgen. Die Ausklinkungen können beispielsweise rechteckig oder quadratisch ausgebildet sein.

In Weiterbildung der Erfindung weist das Gehäuse ein ringartiges Ende auf, wobei sich der Dralleinsatz ausgehend von dem ringartigen Ende von diesem weg erstreckt und abschnittsweise außerhalb des Gehäuses angeordnet ist.

Auf diese Weise umfasst das Gehäuse der erfindungsgemäßen Sprühdüse lediglich den Mundstückbereich mit der Austrittsöffnung und ein ringartiges Ende, das zum Befestigen an einer Rohrleitung oder einem Fitting vorgesehen ist. Als Fitting wird ein rohrförmiger Abschnitt bezeichnet, der beispielsweise an eine Versorgungsleitung angeschweißt ist. Die erfindungsgemäße Sprühdüse nutzt dadurch das Ende der Rohrleitung oder den Fitting als Drallkammer. Das Gehäuse der Sprühdüse selbst kann dadurch wesentlich leichter als bei konventionellen Sprühdüsen ausgeführt werden. Dies ist gerade für den Einsatz bei Gaswäschern, sogenannten Scrubbern, zur Abgasnachbehandlung auf Schiffen von großem Vorteil.

In Weiterbildung der Erfindung weist das Gehäuse an dem ringartigen Ende ein Gewinde auf und ist zum Einschrauben in ein Rohrende oder in ein Gewindefitting vorgesehen.

Auf diese Weise lässt sich die erfindungsgemäße Sprühdüse in sehr einfacher Weise und auch auswechselbar montieren.

In Weiterbildung der Erfindung füllt der Dralleinsatz im Wesentlichen den vollständigen Innenquerschnitt des ringartigen Endes des Gehäuses aus, gesehen in einer Projektion des Dralleinsatzes in Richtung der Mittellängsachse des Gehäuses.

Auf diese Weise kann nur sehr wenig Flüssigkeit am Dralleinsatz vorbeiströmen, so dass im Wesentlichen alle Flüssigkeit, die durch das Gehäuse der erfindungsgemäßen Sprühdüse fließt, in Drehung um die Mittellängsachse versetzt wird. Dadurch ergibt sich ein sehr gutes und gleichmäßiges Sprühbild der erfindungsgemäßen Sprühdüse.

In Weiterbildung der Erfindung weist das Strömungsleitblech in Strömungsrichtung der zu versprühenden Flüssigkeit gesehen eine im Wesentlichen senkrecht zur Mittellängsachse der Sprühdüse angeordnete erste Prallfläche auf, an die sich eine schräg zur Mittellängsachse angeordnete Strömungsleitfläche anschließt.

Eine solche Ausbildung mit einer senkrecht zur Mittellängsachse angeordneten Prallfläche führt überraschenderweise zu einer sehr guten Drallausbildung und dadurch zu einem sehr guten und gleichmäßigen Sprühbild der erfindungsgemäßen Sprühdüse.

In Weiterbildung der Erfindung folgt auf die schräg zur Mittellängsachse angeordnete Strömungsleitfläche eine im Wesentlichen senkrecht zur Mittellängsachse angeordnete zweite Prallfläche.

Auch die zweite Prallfläche sorgt überraschenderweise für eine gute Drallausbildung bei geringem Strömungswiderstand.

In Weiterbildung der Erfindung geht die zweite Prallfläche in den Befestigungssteg über, der im Wesentlichen parallel zur Mittellängsachse angeordnet ist.

Mittels des Befestigungsstegs oder auch mehrerer Befestigungsstege kann der Dralleinsatz in einer vordefinierten Position und dabei einfach und sicher an dem Gehäuse befestigt werden.

Erfindungsgemäß ist auch eine Anordnung mit einer erfindungsgemäßen Sprühdüse und einem Rohrabschnitt vorgesehen, wobei das Gehäuse der Sprühdüse an einem freien Ende des Rohrabschnitts befestigt ist und wobei der Dralleinsatz abschnittsweise unmittelbar von der Innenwand des Rohrabschnitts umgeben ist.

Indem der Dralleinsatz also vom Gehäuse der Sprühdüse aus in den Rohrabschnitt vorragt, kann die Innenwand des Rohrabschnitts als Drallkammer dienen. Dadurch kann die bei konventionellen Sprühdüsengehäusen vorgesehene Drallkammer vollständig entfallen und die erfindungsgemäße Sprühdüse kann deutlich leichter ausgeführt werden. Der Drallabschnitt ist dabei vorteilhaft so ausgebildet, dass zwischen der Innenwand des Rohrabschnitts und dem Außenumfang des Dralleinsatzes nur ein sehr geringer Abstand liegt, beispielsweise ein Abstand von lediglich 1mm oder sogar weniger. Auf diese Weise lässt sich ein sehr gutes Sprühbild der erfindungsgemäßen Sprühdüse in der erfindungsgemäßen Anordnung erzielen, da nur ein sehr geringer Anteil der in dem Rohrabschnitt strömenden Flüssigkeit seitlich am Dralleinsatz vorbeiströmen kann. Die erfindungsgemäße Anordnung ist dadurch in besonderer Weise für Gaswäscher auf Schiffen geeignet, da das Gewicht gegenüber konventionellen Sprühdüsen erheblich verringert werden kann und auch die Gesamtlänge aus Rohrabschnitt und Gehäuse der Sprühdüse deutlich kürzer ist als bei konventionellen Sprühdüsen. Die Anfälligkeit gegenüber mechanischer Belastung durch Vibrationen ist dadurch deutlich verringert und die erfindungsgemäße Anordnung ist leichter und dennoch stabiler als konventionelle Anordnungen. Der Rohrabschnitt kann als Rohrende eines Rohres oder beispielsweise auch als Fitting ausgebildet sein. Sogenannte Fittings bilden Rohrabschnitte, die zur Befestigung der Sprühdüse auch mit einem Gewinde versehen sein können und die mit einer Versorgungsleitung verbunden werden, beispielsweise verschweißt werden.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale der dargestellten und/oder beschriebenen Ausführungsformen lassen sich dabei in beliebiger Weise miteinander kombinieren, ohne den Rahmen der Erfindung zu überschreiten. Dies gilt auch dann, wenn die Einzelmerkmale ohne weitere Einzelmerkmale miteinander kombiniert werden, mit denen sie im Zusammenhang gezeigt oder beschrieben sind. In den Zeichnungen zeigen:
- Fig. 1: eine Ansicht einer erfindungsgemäßen Sprühdüse von schräg vorne,
- Fig. 2: die Sprühdüse der Fig. 1 von schräg hinten,
- Fig. 3: eine Seitenansicht der Sprühdüse der Fig. 1,
- Fig. 4: eine um 90° gedrehte Seitenansicht der Sprühdüse der Fig. 3,
- Fig. 5: eine Schnittansicht auf die Schnittebene V-V in Fig. 4,
- Fig. 6: eine Draufsicht auf die Sprühdüse der Fig. 3,
- Fig. 7: eine Schnittansicht einer erfindungsgemäßen Anordnung mit der Sprühdüse der Fig. 3 im eingebauten Zustand in einen Rohrabschnitt,
- Fig. 8: eine Ansicht des Gehäuses der Sprühdüse der Fig. 1 von schräg unten,
- Fig. 9: eine Ansicht des Gehäuses der Fig. 8 von schräg oben,
- Fig. 10: eine Draufsicht auf das Gehäuse der Fig. 8,
- Fig. 11: eine Schnittansicht des Gehäuses der Fig. 8,
- Fig. 12: eine Seitenansicht eines Strömungsleitblechs des Dralleinsatzes der Sprühdüse der Fig. 1,
- Fig. 13: eine Draufsicht auf das Strömungsleitblech der Fig. 12,
- Fig. 14: eine erste Schrägansicht des Strömungsleitblechs der Fig. 12 und
- Fig. 15: eine zweite Schrägansicht des Strömungsleitblechs der Fig. 12.

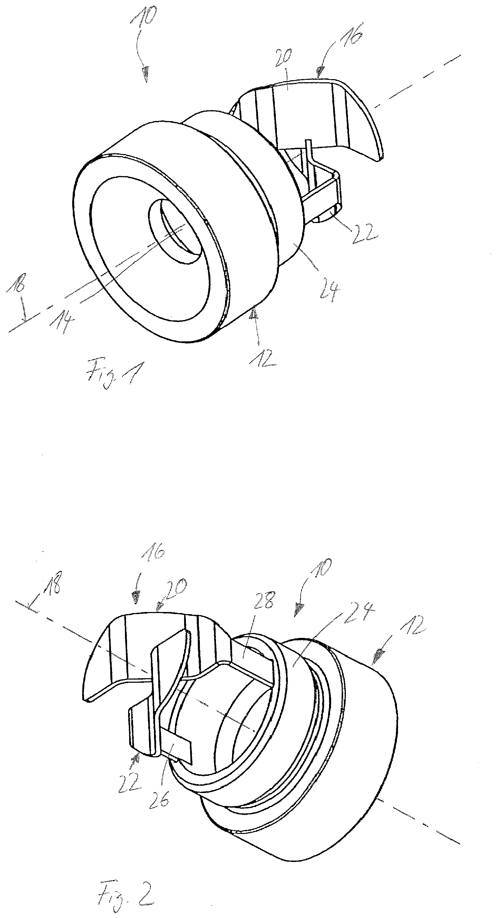

Fig. 1 zeigt eine erfindungsgemäße Sprühdüse 10 gemäß einer bevorzugten Ausführungsform. Die Sprühdüse 10 weist ein Gehäuse 12 mit einer Austrittsöffnung 14 auf und einen Dralleinsatz 16. Die Austrittsöffnung 14 ist konzentrisch zu einer Mittellängsachse 18 der Sprühdüse angeordnet. Das Gehäuse 12 ist bei der dargestellten Ausführungsform rotationssymmetrisch zur Mittellängsachse 18 aufgebaut und der Dralleinsatz 16 ist achsensymmetrisch zur Mittellängsachse 18 angeordnet. Der Dralleinsatz 16 ragt über das stromaufwärts gelegene Ende des Gehäuses 12 hinaus.

Der Dralleinsatz 16 weist ein erstes Strömungsleitblech 20 und ein zweites Strömungsleitblech 22 auf. Die beiden Strömungsleitbleche 20, 22 sind an einem ringartigen Ende 24 des Gehäuses befestigt und ragen dadurch abschnittsweise über das Gehäuse 12 hinaus. Das ringartige Ende 24 des Gehäuses 12 ist mit einem nicht dargestellten Außengewinde versehen. Mit diesem Außengewinde am ringartigen Ende 24 kann die Sprühdüse 10 in ein Rohrende oder auch ein Gewindefitting eingesetzt werden. Als Gewindefitting wird ein rohrartiger Abschnitt bezeichnet, der beispielsweise an eine Versorgungsleitung angeschweißt und mit einem Gewinde zur Befestigung einer Sprühdüse versehen ist. Selbstverständlich kann das Einsetzen und Befestigen der Sprühdüse 10 in ein Rohrende auch ohne Gewinde am ringartigen Ende erfolgen, beispielsweise durch Verlöten oder Verschweißen. In jedem Fall ragt der Dralleinsatz 16 dann in das Rohrende oder das Fitting hinein, so dass ein Endabschnitt des Rohrs oder des Fittings als Drallkammer genutzt wird. Die Sprühdüse 10 selbst kann dadurch wesentlich leichter ausgeführt werden als konventionellen Sprühdüsen, die eine Drallkammer im Gehäuse aufweisen und bei denen der Dralleinsatz dann in der Drallkammer des Gehäuses angeordnet ist. Dadurch kann bei einem Einsatz in Gaswäschern zur Abgasnachbehandlung auf Schiffen der Schwerpunkt des Schiffs tiefer angeordnet werden als bei Verwendung von konventionellen Sprühdüsen und da die erfindungsgemäßen Sprühdüsen 10 unmittelbar an den Enden von Rohren oder in Fittings befestigt werden, ist die Gesamtanordnung weniger empfindlich gegenüber Vibrationen, da die leichter und kürzer ausgebildeten Sprühdüsen 10 geringere Biegemomente in die Rohrenden bzw. Fittings einleiten.

Darüber hinaus ermöglicht die Ausführung des Dralleinsatzes 16 mittels zweier gebogener Strömungsleitbleche auf der einen Seite, ein sehr gutes, gleichmäßiges Sprühbild zu erzielen, und auf der anderen Seite, große offene Querschnitte des Dralleinsatzes zu realisieren. Die erfindungsgemäße Sprühdüse 10 ist dadurch deutlich weniger verstopfungsempfindlich als konventionelle Sprühdüsen. Dies ist insbesondere beim Einsatz auf Schiffen dann von Bedeutung, wenn beispielsweise Seewasser zur Abgasnachbehandlung in den Gaswäscher mittels der Sprühdüse 10 eingesprüht wird.

Üblicherweise werden zahlreiche erfindungsgemäße Sprühdüsen 10 in einem Gaswäscher zur Abgasnachbehandlung eingesetzt, um das vollständige Volumen des austretenden Abgasstroms mit der Waschflüssigkeit zu beaufschlagen.

Die Darstellung der Fig. 2 zeigt die erfindungsgemäße Sprühdüse 10 von schräg hinten. In dieser Ansicht ist zu erkennen, dass die beiden Strömungsleitbleche 20, 22 jeweils einen Befestigungssteg 26, 28 aufweisen, mit dem die Strömungsleitbleche 20, 22 jeweils an dem ringartigen Ende 24 des Gehäuses 12 befestigt sind. Man erkennt in Fig. 2 auch, dass das Gehäuse 12 insgesamt ringförmig ausgebildet ist und lediglich einen unteren Abschnitt mit der Austrittsöffnung 14 und das daran angesetzte ringartige Ende 24 aufweist. Das Gehäuse 12 weist aber keine Drallkammer auf, vielmehr ragt der Dralleinsatz 16 mit den beiden Strömungsleitblechen 20, 22 über das ringartige Ende 24 hinaus.

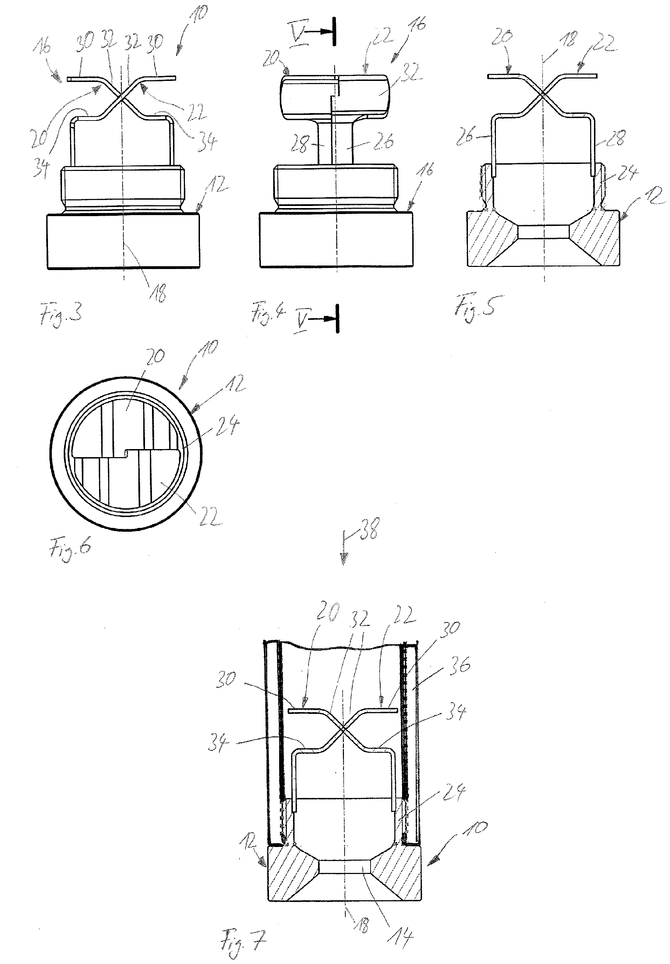

Die Darstellung der Fig. 3 zeigt eine Seitenansicht der Sprühdüse 10 aus Fig. 1.

Zu erkennen ist in dieser Seitenansicht, dass die beiden Strömungsleitbleche 20, 22 jeweils eine erste Prallfläche 30 aufweisen, an die sich dann eine Strömungsleitfläche 32 anschließt, auf die dann jeweils eine zweite Prallfläche 34 folgt. Die ersten Prallflächen 30 sind jeweils senkrecht zur Mittellängsachse 18 der Sprühdüse 10 angeordnet. Die Strömungsleitflächen 32 sind jeweils schräg zur Mittellängsachse 18 angeordnet. Die zweiten Prallflächen 34 sind wieder jeweils senkrecht zur Mittellängsachse 18 angeordnet. Die beiden Strömungsleitflächen 32 sind in einem Winkel von 90° zueinander angeordnet.

Überraschenderweise sorgt die Ausbildung der Strömungsleitbleche 20, 22 mit jeweils zwei senkrecht zur Mittellängsachse angeordneten Prallflächen 30, 34 und jeweils einer zwischen den beiden Prallflächen 30, 34 angeordneten schrägen Strömungsleitfläche 32 zum einen für ein sehr gutes, gleichmäßiges Sprühbild in Form eines Vollkegels und zum anderen für einen geringen Strömungswiderstand des Dralleinsatzes 16. Darüber hinaus ist in der Seitenansicht der Fig. 3 gut zu erkennen, dass der Dralleinsatz 16 große freie Querschnitte aufweist und dadurch verstopfungsunempfindlich ist. Der Dralleinsatz 16 kann durch geeignete und durch Versuche zu ermittelnde Anpassungen auch für die Erzeugung eines Hohlkegelsprays ausgebildet werden.

Die Seitenansicht der Fig. 4 ist gegenüber der Seitenansicht der Fig. 3 um 90° gedreht. Der Blick geht hier auf die Vorderseite der Strömungsleitfläche 32 des Strömungsleitblechs 22 bzw. auf die Rückseite des Strömungsleitblechs 20. Es ist zu erkennen, dass die Befestigungsstege 26, 28 schmäler ausgebildet sind als die Strömungsleitflächen 32.

In der Ansicht der Fig. 4 ist auch bereits zu erkennen, dass die beiden Strömungsleitbleche 20, 22 im Bereich ihrer schrägen Strömungsleitflächen 32 an ihrer jeweils innenliegenden Kante miteinander verbunden sind. Dies sorgt für eine stabile Ausbildung des Dralleinsatzes 16.

Fig. 5 zeigt eine Ansicht auf die Schnittebene V-V in Fig. 4. Zu erkennen ist in dieser Schnittansicht wieder, dass die beiden Strömungsleitbleche 22, 20 in ihrem, die Mittellängsachse 18 unmittelbar umgebenden Bereich miteinander verbunden sind. Weiter ist gut zu erkennen, dass die Befestigungsstege 26, 28 jeweils in passende Ausnehmungen in dem ringartigen Ende 24 des Gehäuses 12 eingesetzt sind. Die beiden Strömungsleitbleche 20, 22 sind im Bereich der Mittellängsachse 18 miteinander verschweißt und auch die Befestigungsstege 26, 28 sind jeweils mit dem Gehäuse 12 verschweißt. Alternativ kann hier selbstverständlich auch eine Lötverbindung oder dergleichen zum Einsatz kommen.

Die Darstellung der Fig. 6 zeigt die erfindungsgemäße Sprühdüse 10 von oben. Man erkennt in dieser Ansicht, dass die beiden Strömungsleitbleche 22, 20 im Wesentlichen den vollständigen freien Innenquerschnitt des ringartigen Endes 24 des Gehäuses 12 ausfüllen und dass eine Außenkontur der beiden Strömungsleitbleche 20, 22 jeweils halbkreisförmig ausgeführt ist. Dadurch kann nur wenig durch die Sprühdüse 10 hindurchströmende Flüssigkeit an den Strömungsleitblechen 20, 22 vorbeiströmen.

Dies ist auch in der Schnittansicht der Fig. 7 zu erkennen. Die erfindungsgemäße Sprühdüse 10 ist hier im montierten Zustand gezeigt und mit dem Außengewinde des ringartigen Endes 24 in das Ende eines Rohrabschnitts 36 eingeschraubt, das mit einem passenden Innengewinde versehen ist. Es ist gut zu erkennen, dass sich die beiden Strömungsleitbleche 22, 20, vgl. auch Fig. 3, bis fast zur Innenwand des Rohrabschnitts 36 erstrecken. Dadurch kann nur wenig Flüssigkeit zwischen den radial außenliegenden Enden der Strömungsleitbleche 22, 20 und der Innenwand des Rohrabschnitts 36 vorbeiströmen.

Im Betrieb strömt zu verströmende Flüssigkeit in Richtung eines Pfeils 38 durch das Rohr mit den Rohrabschnitt 36 und damit auch durch die erfindungsgemäße Sprühdüse 10. In Strömungsrichtung gesehen trifft die Flüssigkeit, die stromaufwärts des Dralleinsatzes eine Axialströmung bildet, auf den Dralleinsatz 16 und wird durch das Zusammenwirken der Prallflächen 30, 34, der Strömungsleitflächen 32 des Dralleinsatzes und der Innenwand des Rohrabschnitts 36 in eine Drallströmung umgesetzt. Die Flüssigkeit, die stromabwärts des Dralleinsatzes 16 eine Drallströmung bildet, gelangt dann bis zur Austrittsöffnung 14 und tritt aus dieser in Form eines Kegelsprays aus. Die erfindungsgemäße Sprühdüse 10 verzichtet auf eine Drallkammer im Gehäuse 12 und kann dadurch wesentlich leichter als eine herkömmliche Sprühdüse ausgeführt werden. Die Anfälligkeit gegenüber Vibrationen ist durch das geringe Gewicht der Sprühdüse 10 sowie auch durch kürzere Hebelarme, die an dem Rohrende 36 angreifen, deutlich verringert. Die erfindungsgemäße Sprühdüse 10 weist darüber hinaus große freie Querschnitte auf und ist dadurch wenig verstopfungsempfindlich.

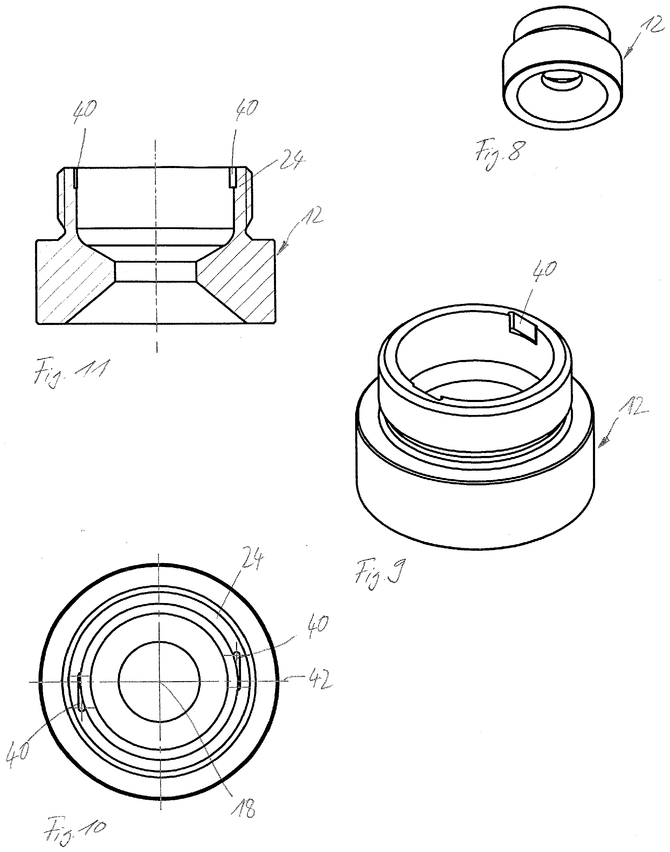

Die Fig. 8 bis 11 zeigen verschiedene Ansichten des Gehäuses 12. In Fig. 9 und Fig. 11 sind einander gegenüberliegende Ausnehmungen 40 an der Innenseite des ringartigen Endes 24 des Gehäuses 12 zu erkennen. In diese Ausnehmungen 40 werden die Enden der Befestigungsstege 26, 28, vgl. Fig. 5, eingesetzt und dadurch in einer vordefinierten Position angeordnet. Die Strömungsleitbleche können dann durch Verschweißen mit dem Gehäuse 12 im Bereich dieser Ausnehmungen 40 fixiert werden.

Fig. 9 lässt erkennen, dass die Ausnehmungen 40 eine sich verändernde Tiefe aufweisen. Dies liegt daran, siehe auch Fig. 10, dass die Ausnehmungen 40 in die Innenwand des ringartigen Endes 24 so eingebracht sind, dass sie sich ausgehend von der in Fig. 10 waagrecht verlaufenden Mittellinie 42 nach oben bzw. nach unten erstrecken. Da der Grund der Ausnehmungen 40 auf der anderen Seite aber senkrecht zur Mittellinie 42 angeordnet ist, vergrößert sich die Tiefe der Ausnehmungen 40 mit zunehmendem Abstand von der Mittellinie 42.

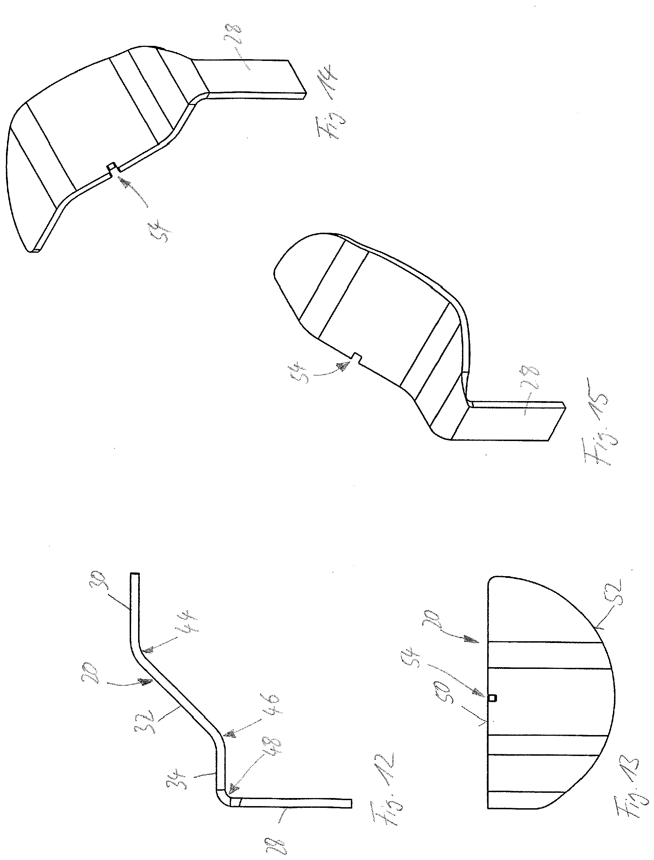

Die Darstellungen der Fig. 12 bis 15 zeigen verschiedene Ansichten des Strömungsleitblechs 20, wobei, wie ausgeführt wurde, das Strömungsleitblech 20 identisch ausgebildet ist zum Strömungsleitblech 22.

Die Seitenansicht der Fig. 12 lässt erkennen, dass das Strömungsleitblech insgesamt drei Biegestellen 44, 46 und 48 aufweist. Die Biegeachsen der Biegestellen 44, 46, 48 verlaufen jeweils parallel zueinander, so dass in der Seitenansicht der Fig. 12 lediglich die schmale Seitenkante des Strömungsleitblechs 20 zu erkennen ist.

Alternativ kann das Strömungsleitblech 20 beispielsweise auch so geformt werden, dass die Biegeachsen nicht parallel zueinander liegen. Die in Fig. 12 dargestellte Ausführungsform des Strömungsleitblechs 20 ist aber besonders vorteilhaft, da einfach und kostengünstig herstellbar.

Gut zu erkennen sind in dieser Ansicht auch die erste Prallfläche 30, die Strömungsleitfläche 32, die zweite Prallfläche 34 und der Befestigungsabschnitt 28, die in Fig. 12 von oben nach unten in dieser Richtung aufeinanderfolgen.

Fig. 13 zeigt eine Ansicht des Strömungsleitblechs 20 von oben. Eine Innenkante 50 des Strömungsleitblechs 20 ist geradlinig, eine in Fig. 13 unten liegende Außenkante dahingegen etwa halbkreisförmig. In dem Bereich der Innenkante 50, die, vgl. Fig. 2, im fertiggestellten Zustand der Sprühdüse 10 angrenzend an die Mittellängsachse 18 zu liegen kommt, ist eine Ausklinkung oder Ausnehmung 54 vorgesehen. Die Breite der Ausnehmung 54 ist etwas größer als die Materialstärke des Strömungsleitblechs 20. Diese Ausnehmung 54 ist auch in Fig. 14 und Fig. 15 gut zu erkennen. Die Strömungsleitbleche 20, 22 werden mit ihren geradlinig verlaufenden Innenkanten 50 gegeneinandergesetzt und so zueinander angeordnet, dass die Ausnehmungen 54 ineinander eingreifen. In dem, die Mittellängsachse 18 unmittelbar umgebenden Bereich sind die Strömungsleitbleche 20, 22 dadurch bereits aneinander fixiert, vgl. wieder Fig. 1 und Fig. 2. In diesem Bereich, also dem Bereich der ineinander eingreifenden Ausnehmungen 54, können die Strömungsleitbleche 20, 22 dann noch miteinander verschweißt werden.

Die Befestigungsabschnitte 26, 28 werden in die Ausnehmungen 40 des Gehäuses 12 eingesetzt, vgl. Fig. 10. Der aus den beiden Strömungsleitblechen 20, 22 bestehende Dralleinsatz 16 kann dadurch in einfacher Weise mittels Verschweißen oder Verlöten mit dem Gehäuse 12 verbunden werden und bildet, nicht zuletzt aufgrund der Verbindung der beiden Strömungsleitbleche 20, 22 im Bereich der Mittellängsachse 18 durch die ineinander eingreifenden Ausnehmungen 54, eine sehr stabile Einheit.

Die Strömungsleitbleche 20, 22 und das Gehäuse 12 können beispielsweise aus chemisch beständigem und auch gegenüber Salzwasser korrosionsfestem Edelstahl bestehen.

## Patentansprüche

1. Sprühdüse zum Versprühen von Flüssigkeiten mit einem Gehäuse (12), wobei das Gehäuse (12) eine Austrittsöffnung (14) aufweist, und mit einem stromaufwärts der Austrittsöffnung (14) angeordneten Dralleinsatz (16), **dadurch gekennzeichnet, dass** der Dralleinsatz (16) an dem Gehäuse (12) fixiert und abschnittsweise außerhalb des Gehäuses (12) angeordnet ist.

2. Sprühdüse nach Anspruch 1, **dadurch gekennzeichnet, dass** der Dralleinsatz (16) wenigstens ein gebogenes Strömungsleitblech (20, 22) aufweist, das wenigstens eine schräg zu einer Mittellängsachse (18) des Gehäuses (12) angeordnete Strömungsleitfläche (32) für die zu versprühende Flüssigkeit bildet.

3. Sprühdüse nach Anspruch 1 oder 2, **dadurch gekennzeichnet, dass** das Strömungsleitblech (20, 22) mehrere durch Biegestellen (44, 46, 48) voneinander getrennte ebene Abschnitte aufweist, wobei jede der Biegestellen (44, 46, 48) mittels einer Biegung um eine Biegeachse gebildet ist.

4. Sprühdüse nach Anspruch 2 oder 3, **dadurch gekennzeichnet, dass** die Biegeachsen aller Biegestellen (44, 46, 48) des Strömungsleitblechs (20, 22) parallel zueinander angeordnet sind.

5. Sprühdüse nach Anspruch2, 3 oder 4, **dadurch gekennzeichnet, dass** die Biegeachsen aller Biegestellen (44, 46, 48) senkrecht zur Mittellängsachse (18) des Gehäuses (12) angeordnet sind.

6. Sprühdüse nach einem der vorstehenden Ansprüche, **dadurch gekennzeichnet, dass** das Strömungsleitblech (20, 22) einen sich parallel zur Mittellängsachse (18) der Sprühdüse erstreckenden Befestigungstreifen (26, 28) aufweist, der mit einem Gehäuse (12) der Sprühdüse verbunden ist.

7. Sprühdüse nach Anspruch 6, **dadurch gekennzeichnet, dass** der Befestigungsstreifen (26, 28) in eine passende Ausnehmung (40) am Gehäuse (12) eingesetzt ist.

8. Sprühdüse nach wenigstens einem der vorstehenden Ansprüche, **dadurch gekennzeichnet, dass** zwei identisch ausgebildete Strömungsleitbleche (20, 22) vorgesehen sind, die im Bereich der Mittellängsachse (18) des Gehäuses (12) miteinander verbunden sind.

9. Sprühdüse nach Anspruch 8, **dadurch gekennzeichnet, dass** die beiden Strömungsleitbleche (20, 22) an den Innenkanten (50) der jeweils schräg zur Mittellängsachse (18) des Gehäuses (12) angeordneten Strömungsleitflächen (32) miteinander verbunden sind.

10. Sprühdüse nach Anspruch 8 oder 9, **dadurch gekennzeichnet, dass** die beiden Strömungsleitbleche (20, 22) achsensymmetrisch zur Mittellängsachse (18) des Gehäuses (12) angeordnet sind.

11. Sprühdüse nach Anspruch 8, 9 oder 10, **dadurch gekennzeichnet, dass** jedes der Strömungsleitbleche (20, 22) an einer Innenkante (50) eine Ausklinkung (54) aufweist, deren Breite im Wesentlichen der Dicke der Strömungsleitbleche (20, 22) entspricht, wobei die beiden Strömungsleitbleche (20, 22) an den Ausklinkungen (54) ineinander eingreifen.

12. Sprühdüse nach wenigstens einem der vorstehenden Ansprüche, **dadurch gekennzeichnet, dass** das Gehäuse (12) einen ringartiges Ende (24) aufweist, wobei sich der Dralleinsatz (16) ausgehend von dem ringartigen Ende (24) von diesem weg erstreckt.

13. Sprühdüse nach Anspruch 12, **dadurch gekennzeichnet, dass** das Gehäuse (12) an dem ringartigen Ende (24) ein Gewinde aufweist und zum Einschrauben in ein Rohrende (36) oder in ein Gewindefitting vorgesehen ist.

14. Sprühdüse nach Anspruch 12 oder 13, **dadurch gekennzeichnet, dass** in einer Projektion des Dralleinsatzes (16) in Richtung der Mittellängsachse (18) des Gehäuses (12) gesehen der Dralleinsatz (16) im Wesentlichen den vollständigen Innenquerschnitt des ringartigen Endes (24) des Gehäuses (12) ausfüllt.

15. Sprühdüse nach wenigstens einem der vorstehenden Ansprüche, **dadurch gekennzeichnet, dass** das Strömungsleitblech (20, 22) in Strömungsrichtung der zu versprühenden Flüssigkeit gesehen eine im Wesentlichen senkrecht zur Mittellängsachse (18) der Sprühdüse (10) angeordnete erste Prallfläche (30) aufweist, an die sich eine schräg zur Mittellängsachse (18) angeordnete Strömungsleitfläche (32) anschließt.

16. Sprühdüse nach Anspruch 15, **dadurch gekennzeichnet, dass** auf die schräg zur Mittellängsachse (18) angeordnete Strömungsleitfläche (32) eine im Wesentlichen senkrecht zur Mittellängsachse (18) angeordnete zweite Prallfläche (34) folgt.

17. Sprühdüse nach Anspruch 16, **dadurch gekennzeichnet, dass** die zweite Prallfläche (34) in den Befestigungssteg (26, 28) übergeht, der im Wesentlichen parallel zur Mittellängsachse (18) angeordnet ist.

18. Anordnung mit einer Sprühdüse nach einem der vorstehenden Ansprüche und einem Rohrabschnitt (36), **dadurch gekennzeichnet, dass** das Gehäuse (12) der Sprühdüse an einem freien Ende des Rohrabschnitts (36) befestigt ist und dass der Dralleinsatz (16) abschnittsweise unmittelbar von der Innenwand des Rohrabschnitts (36) umgeben ist.
